# EUROPÄISCHE PATENTSCHRIFT

(11) **EP 0 893 221 B1**
(45) Veröffentlichungstag und Bekanntmachung des Hinweises auf die Patenterteilung: **12.02.2003**
(21) Anmeldenummer: 98113463.8
(22) Anmeldetag: 20.07.1998
(51) Int. Cl.: B29C 33/30, B29C 33/44, B29C 45/26

(54) **Werkzeug für Spritz- oder Druckguss**
Mould for injection or compression moulding
Moule pour le moulage par injection ou compression

(30) Priorität: 23.07.1997 DE 19731536
(43) Veröffentlichungstag der Anmeldung: 27.01.1999
(73) Patentinhaber: Edegs Formenbau GmbH, 71691 Freiberg (DE)
(72) Erfinder: Reber, Andreas, 71297 Mönsheim (DE)
(74) Vertreter: Dreiss, Fuhlendorf, Steimle & Becker

(56) Entgegenhaltungen:
- EP-A- 0 111 570
- DE-A- 3 932 039
- DE-A- 4 219 920
- DE-U- 8 309 096
- GB-A- 1 064 268
- US-A- 4 500 275
- US-A- 4 743 192
- US-A- 4 750 876

## Beschreibung

### Allgemeine Charakterisierung

Die Erfindung betrifft ein Werkzeug für Spritz- oder Druckguss gemäß dem Oberbegriff des Patentanspruchs 1 sowie ein Verfahren zum Wechseln eines Spritzgieß- oder Druckguß- Werkzeuges gemäß dem Oberbegriff des Patentanspruch 15. Bei diesem Werkzeug bilden zwei Konturplatten, die Ausnehmungen aufweisen, die bei Aneinanderliegen die Form eines Werkstücks ergeben, zusammen mit einer oder mehreren Trägerplatten je eine Werkzeughälfte, die in einer Spritzgießmaschine anordenbar sind. Der Einfachheit halber wird im Folgenden stets von Spritzgießwerkzeugen gesprochen. Die Erfindung ist aber auch bei Druckgussverfahren (für Al-Legierungen) anwendbar.

### Stand der Technik

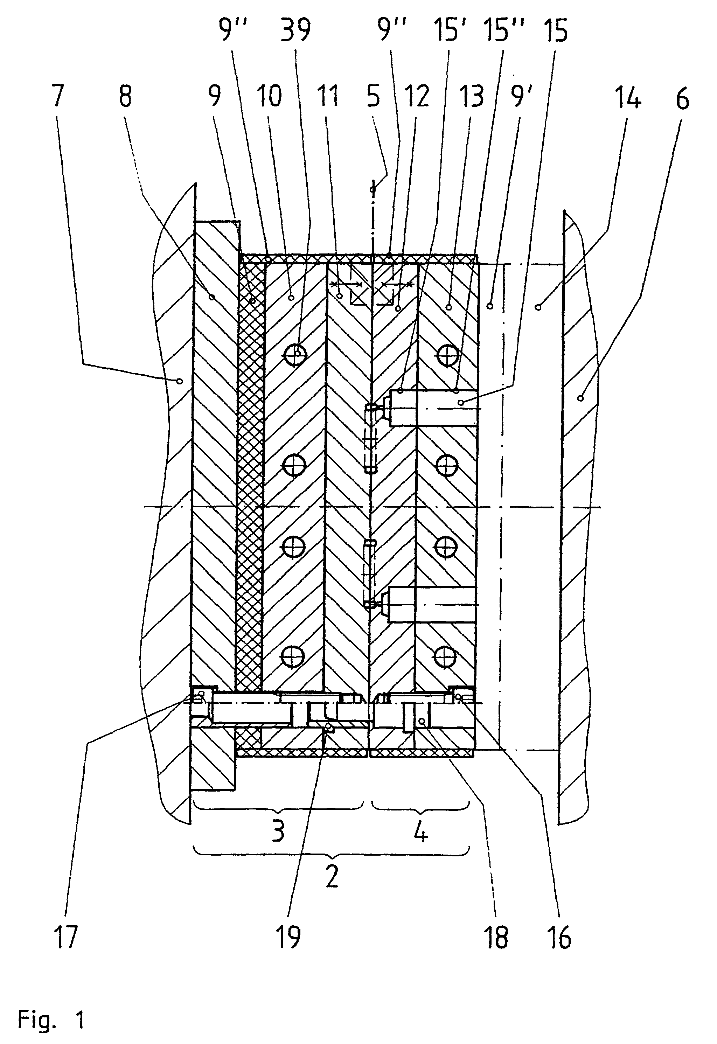

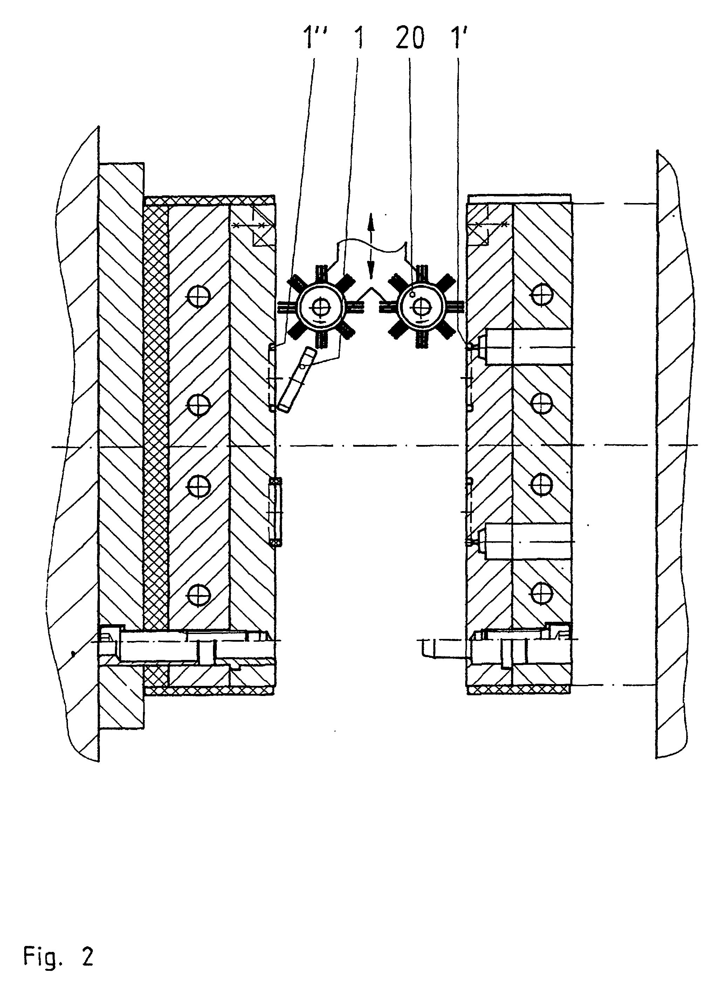

Spritzgießwerkzeuge der eingangs genannten Art sind bekannt; vgl. z.B. Prospekt N. 135.D.0.0.000.09.96 der Fa. EOC Normalien GmbH + Co. KG, D - 58463 Lüdenscheid (siehe u.a. das Titelblatt und S. 2, sowie ferner EP 0 273 405 B1, DE 29 38 665 C2, DE 42 19 919 C2). Bei allen diesen Vorrichtungen, die u.a. den automatischen Werkzeugwechsel betreffen, wird jeweils das gesamte Werkzeug, d.h. - im Sinne des Oberbegriffs des Patentanspruches 1: die aus Trägerplatten und Konturplatten bestehende Einheitausgewechselt. Um die Nachteile des Standes der Technik darzustellen und daraus die Aufgabenstellung der Erfindung abzuleiten, wird eine bekannte Vorrichtung im Folgenden an Hand der Figuren 1 und 2 beschrieben. Es stellen dar:
- Figur 1: ein Querschnitt durch ein bekanntes Spritzgießwerkzeug in geschlossenem Zustand;
- Figur 2: das Spritzgießwerkzeug nach Figur 1 in geöffnetem Zustand.

Mit dem Spritzgießwerkzeug nach Figuren 1 und 2 wird ein Ring 1 aus elastomerem Material gespritzt (vgl. Figur 2). Dieses Material ist im kalten Zustand flüssig und wird mittels gekühlter Düsen in die Form gebracht. Dort vernetzt es sich und wird fest. Die Form des Ringes 1, also des Werkstücks, wird durch die Ausnehmungen 1', 1" in den Konturplatten 11, 12 definiert.

Das Spritzgießwerkzeug 2 besteht aus Werkzeughälften 3, 4, die entlang einer strichpunktiert eingezeichneten Ebene 5 trennbar sind. Die beiden Werkzeughälften sind fest (jedoch lösbar) mit den Platten 6, 7 der Spritzgießmaschine verschraubt. In der Praxis sind verschiedene Verbindungen gebräuchlich. Die Platten 6, 7 werden beim Spritzgießvorgang mit hohem Druck gegeneinander gepresst. Zur Entformung werden sie voneinander wegbewegt. Dabei ist meist die rechte Platte 6 stationär und die linke Platte 7 beweglich.

Die linke Werkzeughälfte 3 wird durch eine Grundplatte 8, eine Isolierplatte 9, eine Trägerplatte (Heizplatte) 10 und eine Konturplatte 11 gebildet. Die rechte Werkzeughälfte 4 wird durch eine Konturplatte 12, eine Trägerplatte (Heizplatte) 13 gebildet. Daran schließt sich die strichpunktiert angedeutete Einspritzeinheit 14, zu der auch eine Isolierplatte 9' gehört, an. Die Zuführung des Materials erfolgt durch Düsen 15, die - bei der Verarbeitung von elastomerem Material - gekühlt sind, um den Eintritt des Materials in kühlem (= nicht erhitztem) Zustand in die durch die Ausnehmungen 1', 1" gebildete Form zu ermöglichen. Dort wird das Material erhitzt und vulkanisiert. Daher werden die Konturplatten 11, 12 durch Kontakte mit den Trägerplatten 10, 13 erhitzt, in denen sich Öffnungen 39 befinden, in denen (nicht gezeigte) Heizkörper angeordnet sind.

Bei der Verarbeitung thermoplastischen Materials werden die Trägerplatten 10, 13 und durch sie die Konturplatten 11, 12 gekühlt, so dass das Material in plastischem Zustand in die Form eintritt und dort erstarrt. Daher haben die Trägerplatten je nach Art des verarbeiteten Materials die Funktion von Heiz- oder Kühlplatten.

Die Düsen 15 erstrecken sich durch Öffnungen 15', 15" in der Konturplatte 12 und der Trägerplatte 13 von der Einspritzeinheit 14 her hindurch. Bei Verarbeitung von Elastomeren sind die Düsen mit einem Kühlmantel umgeben (vgl. z.B. DE 44 19 861 C1). Die Einspritzeinheit enthält die (nicht gezeigten) Kanäle zur Zuführung des Materials.

Man kann das Material jedoch auch direkt von der Maschinendüse in die Heizplatte 13 und durch Verteilerbohrungen in die Ausnehmungen 1', 1" führen. Das in diesen Bohrungen vernetzte Material muss bei der Entformung dann ebenfalls-mit dem Werkstück aus dem Werkzeug entfernt werden. Man spricht dann von Stangenanguss. Auch derartige Verfahren sind von den folgenden Ausführungen mit abgedeckt.

Die Entformung der Werkstücke (Ring 1) erfolgt z.B. durch Bürsten 20, aber auch durch Auswerfer o.dgl.

Die Werkzeughälfte 4 ist mit Schrauben 16 verschraubt und mit der Einspritzeinheit 14 verbunden (nicht dargestellt). Diese ist mit der Platte 6 fest verbunden. Die Werkzeughälfte 3 ist mit der Schraube 17 verschraubt und mit der Platte 7 fest verbunden. Die Werkzeughälfte 4 ist über ein Schnellspannsystem (nicht dargestellt, s. aber Katalog EOC) mit der Einspritzeinheit verbunden und diese dann wiederum mit der Maschinenplatte 6. Die rechte Werkzeughälfte 4 weist über die Ebene 5 nach links vorstehende Führungszapfen 18 auf, die eine Positionierung der Werkzeughälften 3, 4 in geschlossenem Zustand im Zusammenwirken mit Führungshülsen 19, die an der Werkzeughälfte 3 vorgesehen sind, bewirken. Durch die Verschraubung mittels der Schrauben 16, 17 sowie durch seitliche angeordnete Isolierplatten 9" bilden die beiden Werkzeughälften 3, 4 eine geschlossene Einheit, die nach dem Stand der Technik für jedes Werkstück separat hergestellt und beim Werkzeugwechsel ausgetauscht wird.

Aus der US-A-4 743 192 ist ein zwei Werkzeughälften aufweisendes Spritzwerkzeug bekannt, bei dem die Werkzeughälften jeweils durch eine Trägerplatte und eine Konturplatte gebildet werden. Die Konturplatten sind mit Kanälen zur Temperaturregelung versehen und werden mittels Spanneinrichtungen auf der Trägerplatte verspannt. Zwischen den Trägerplatten und Konturplatten ist jeweils eine Nut/Federverbindung vorgesehen. Für unterschiedliche Werkstücke müssen unterschiedliche Konturplatten mit Kanälen, zu Verfügung gestellt werden. Die Frage, wie beim Austausch heißer Konturplatten durch kalte Konturplatten und der dann folgenden Ausdehnung bei Erwärmung eine exakte Lage der beiden Konturplatten aneinander gewährleistet werden kann, ist nicht angesprochen.

Bei der DE 42 19 920 A wird das komplette Werkzeug (also beide Werkzeughälften zusammen) ausgetauscht, Dazu ist entlang der Maschine ein Laufschlitten vorgesehen, der einerseits die heraus zu nehmende Werkzeugeinheit aufnimmt und andererseits die neu einzusetzende Werkzeugeinheit heranführt und einschiebt.

Die DE 83 090 096 U zeigte vier paarweise angeordnete Zentriereinheiten, mit der zwei Platten aneinander zentriert werden können. Die DE 39 32 039 A zeigt eine Gummi-Spritz-Presse mit einem aus zwei Werkzeughälften bestehenden Werkzeug, bei der jede Werkzeughälfte durch ein Formteil und eine Heizplatte gebildet wird und die Heizelemente als Heizwendeln in die Heizplatte eingegossen sind. Die US-A-4 500 275 zeigt eine Schnellspanneinrichtung für Spritzgießmaschinen. Die EP-A-0 111 570 zeigt eine spezielle Spanneinrichtung für die Formhälften eines Spritzwerkzeuges.

### Die Aufgabe

Der Erfindung liegt die Aufgabe zugrunde, die Kosten für derartige Werkzeuge zu verringern und die Wechselzeiten zu verkürzen, die bei der Umrüstung von der Produktion eines Werkstückes einer bestimmten Geometrie auf die Produktion eines Werkstücks einer anderen Geometrie erforderlich sind.

### Die Lösung

Erfindungsgemäß wird diese Aufgabe mit mit dem Werkzeug nach Anspruch 1 und mit dem Verfahren nach Anspruch 15 gelöst.

Vorteilhafte Weiterbildungen der Erfindung sind in den Unteransprüche definiert.

### Die Vorteile

Es ergibt sich somit ein erheblich vereinfachtes Werkzeug, das innerhalb bestimmter Produktgruppen zum Werkzeugwechsel lediglich einen Austausch der Konturplatten erforderlich macht. Auf diese Weise kann man ein einfaches Modulsystem - pro Produktgruppe eine Art Werkzeugfamilie -, jeweils bestehend nur aus Konturplatten, aufbauen, bei dem die nur durch Trägerplatte und Isolierplatte gebildete Einheit für mehrere Werkstücke und Sätze von jeweils auszuwechselnden Konturplatten brauchbar ist. Dadurch ergibt sich pro Werkstück ein erheblich billigeres Werkzeug, das etwa nur die Hälfte eines kompletten Werkzeuges kostet.

Außerdem können die Konturplatten sehr viel einfacher ausgewechselt und damit das Werkzeug schneller umgerüstet werden. Die Zeitersparnis ermöglicht eine Umrüstung statt in vier bis sechs Stunden in nur fünfzehn bis dreißig Minuten.

Es ergeben sich auch im Handling erhebliche Vorteile. Eine Schwierigkeit eines schnellen Austauschens der Konturplatten besteht nun an sich darin, dass die Werkzeughälften heiß sind (ca. 200°C) und das neu einzuwechselnde Paar Konturplatten Raumtemperatur besitzt. Bei dieser Temperaturdifferenz (ΔT = ca. 180 K) macht sich eine Differenz der Wärmeausdehnung der Platten, je nach Größe des Werkzeugs, von Δl = ca. 0,5 - 1 mm, bereits deutlich bemerkbar. Dennoch müssen die Konturplatten, sowohl in heißem als auch kaltem Zustand, exakt positioniert und ohne Verspannen ein- und ausbaubar sein. Dieses Problem wird über eine Kreuzzentriereinrichtung gelöst.

### Ausführungsbeispiele

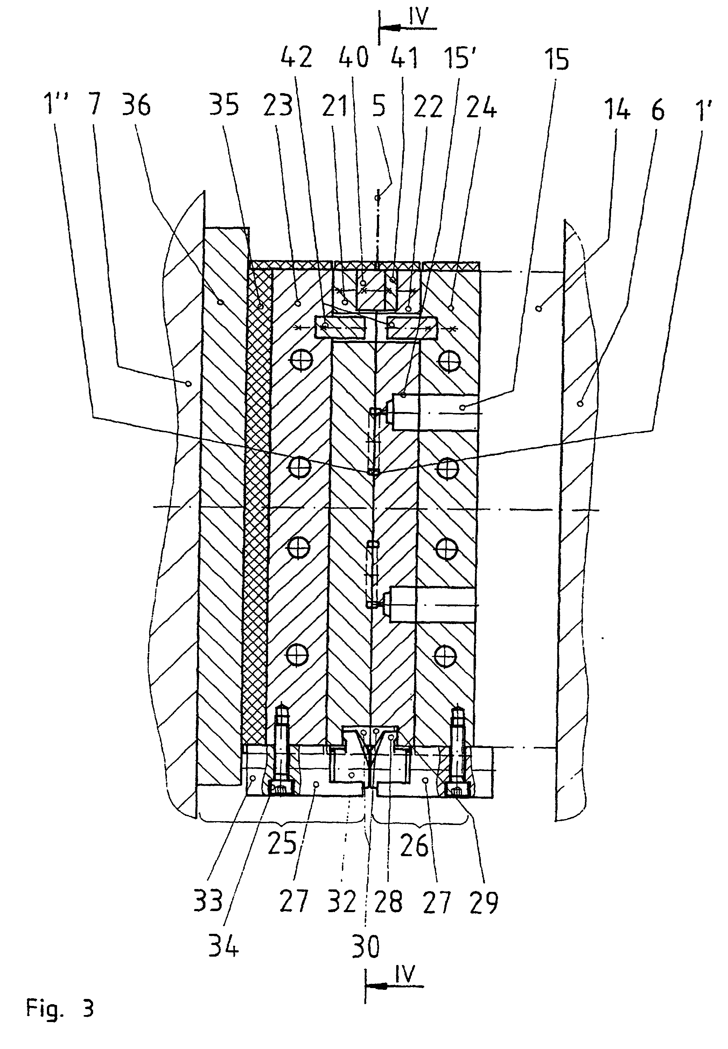

Ausführungsbeispiele der Erfindung und ihre vorteilhaften Weiterbildungen werden im Folgenden an Hand der Figuren 3 bis 13 beschrieben. Es stellen dar:
- Figur 3: ein erstes Ausführungsbeispiel in geschlossenem Zustand;

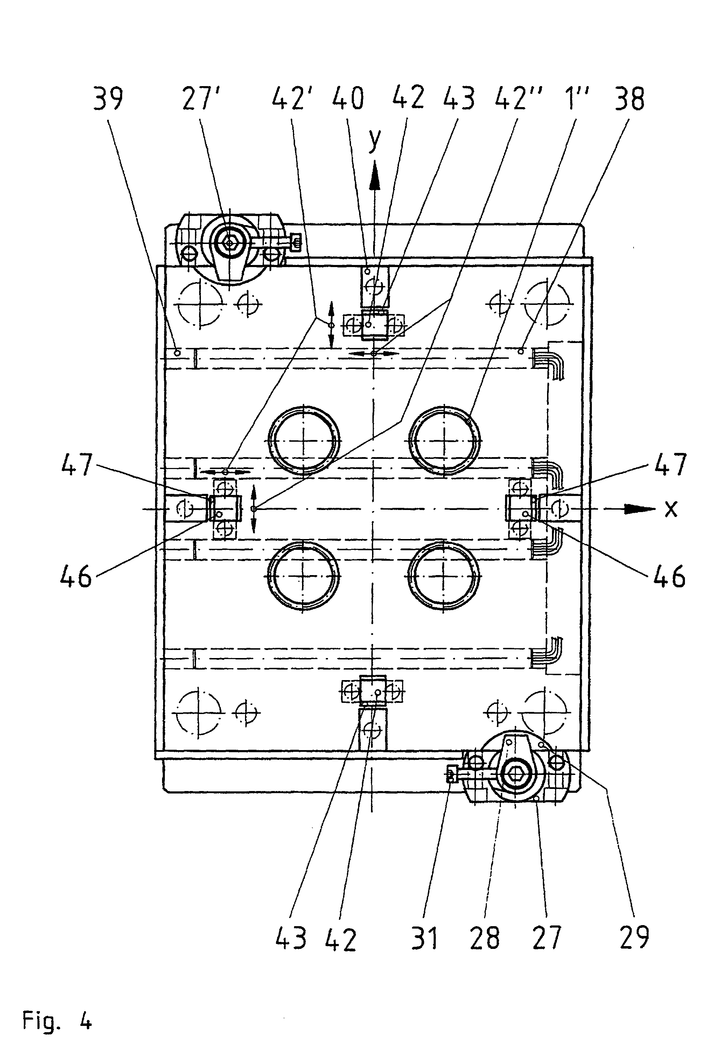

- Figur 4: eine Ansicht in Richtung der Pfeile IV-IV in Figur 3;

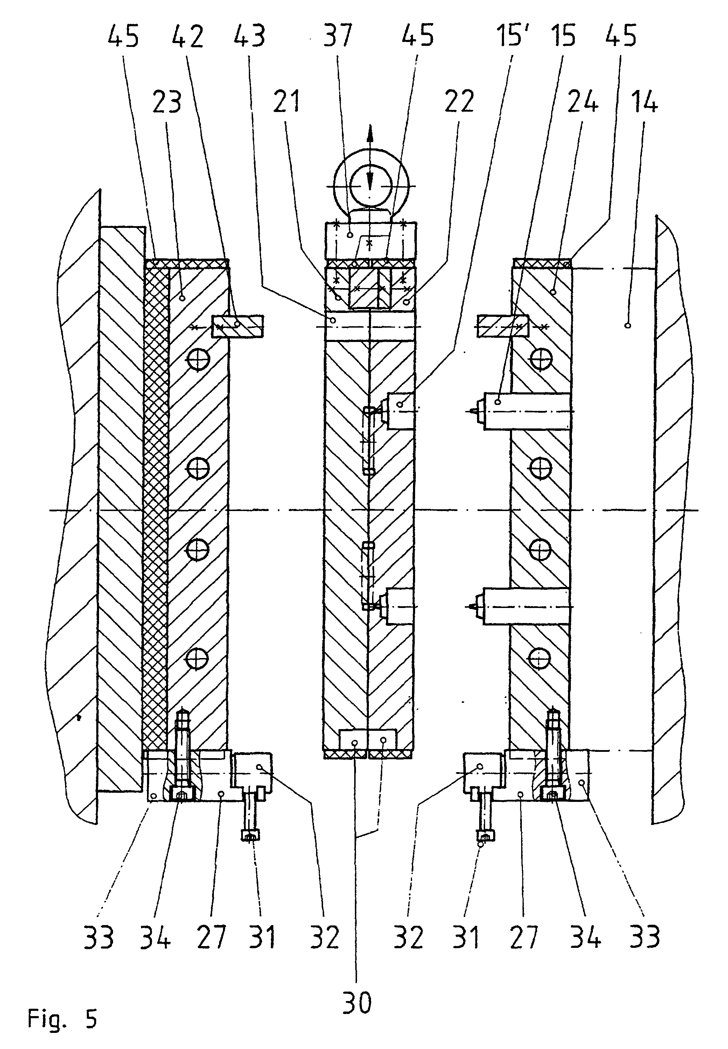

- Figur 5: das erste Ausführungsbeispiel nach Figur 3 und 4 in einem Zustand, in dem die Konturplatten 21, 22 als Einheit von den übrigen Teilen des Werkzeugs getrennt sind und ausgewechselt werden;

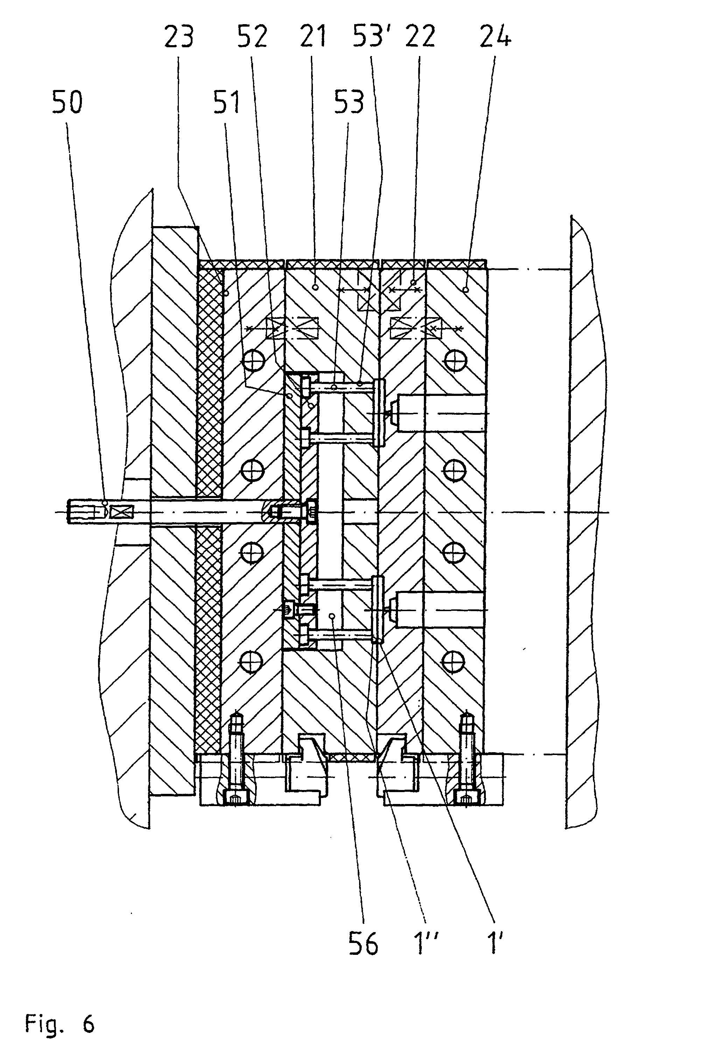

- Figur 6: ein zweites Ausführungsbeispiel in geschlossenem Zustand;

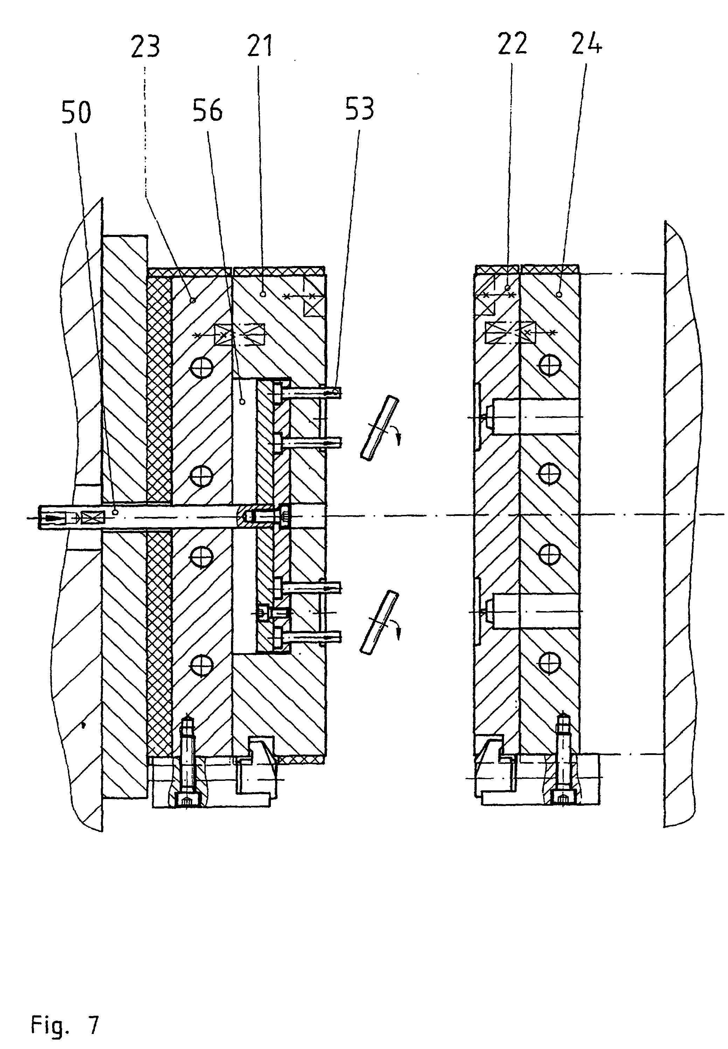

- Figur 7: das zweite Ausführungsbeispiel nach Figur 6 in geöffnetem Zustand;

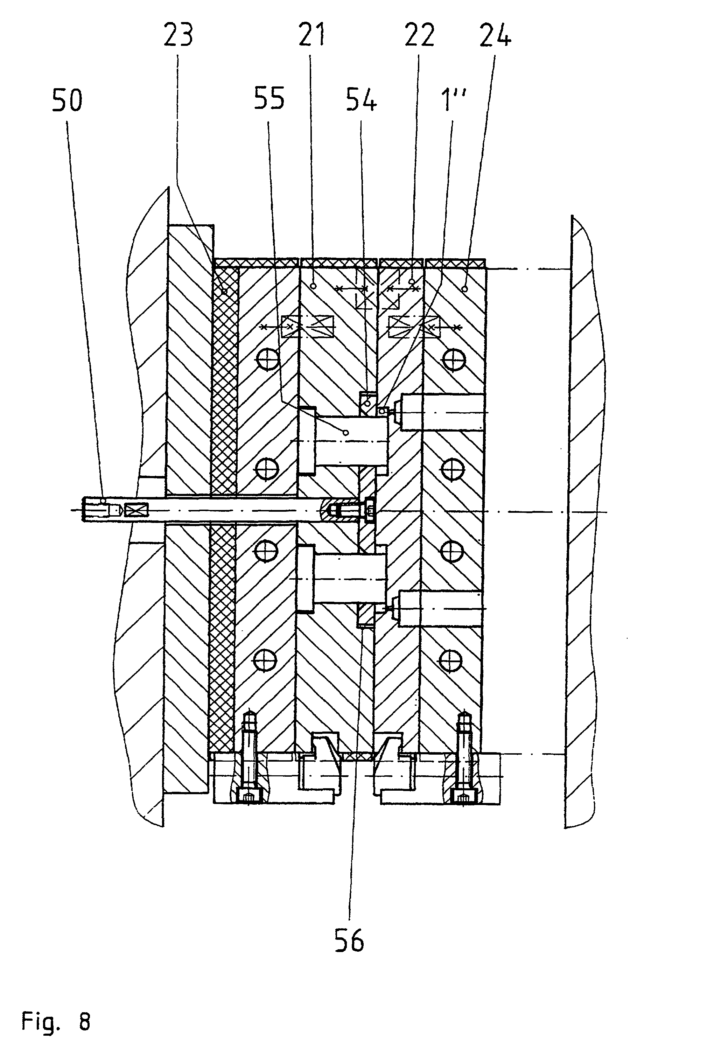

- Figur 8: ein drittes Ausführungsbeispiel in geschlossenem Zustand;

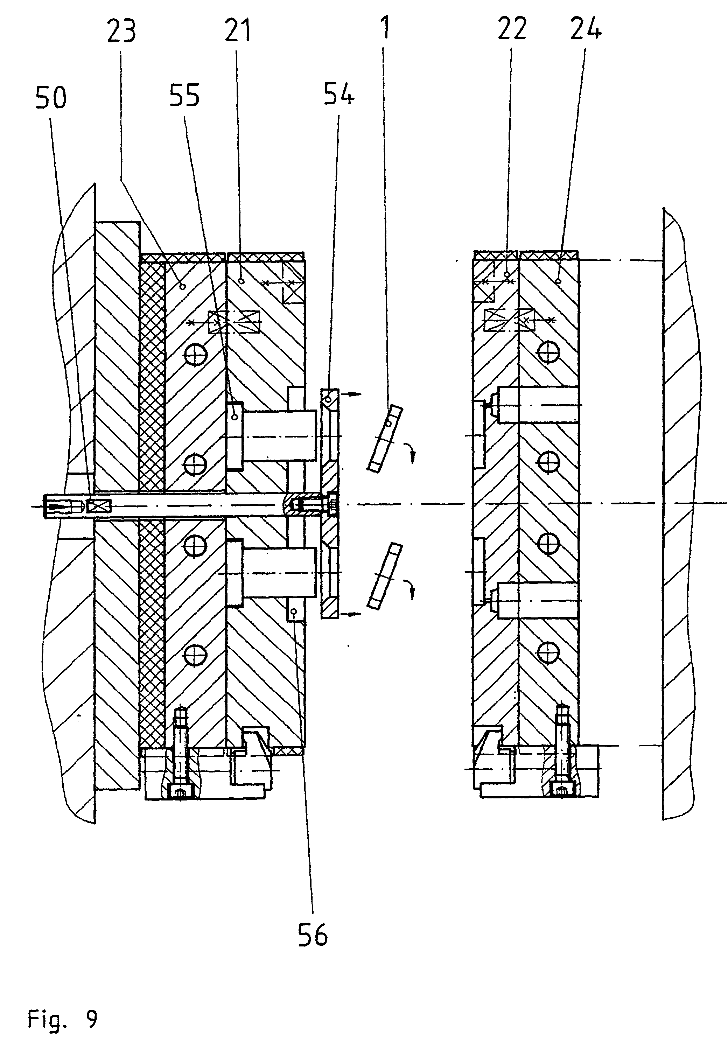

- Figur 9: das dritte Ausführungsbeispiel nach Figur 8 in geöffnetem Zustand;

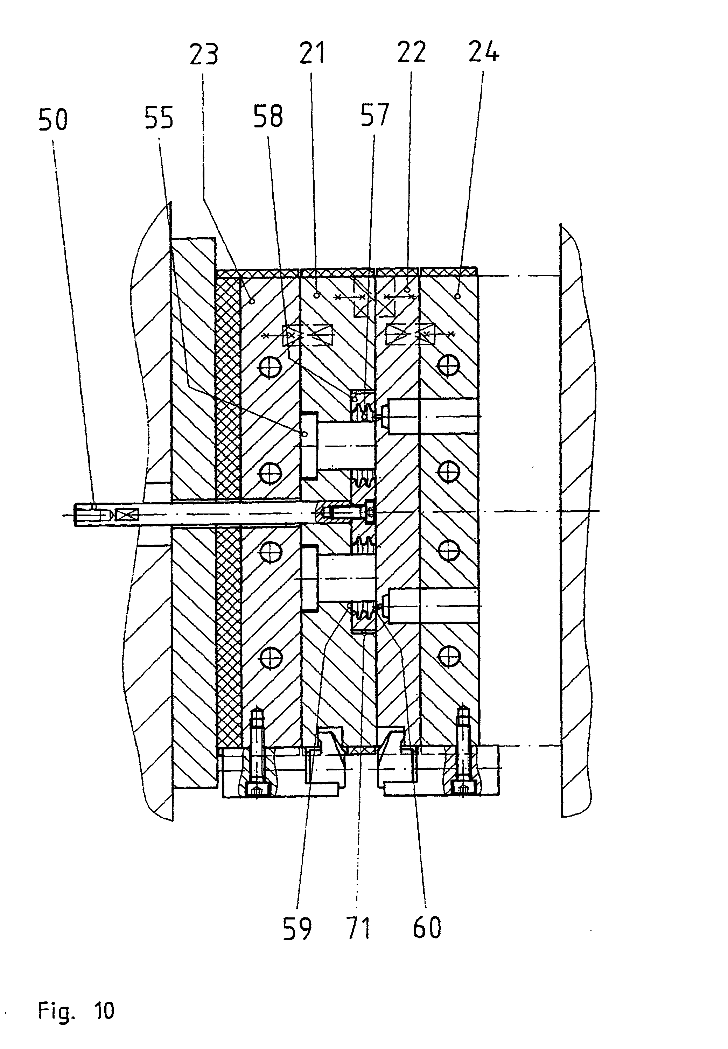

- Figur 10: ein viertes Ausführungsbeispiel in geschlossenem Zustand;

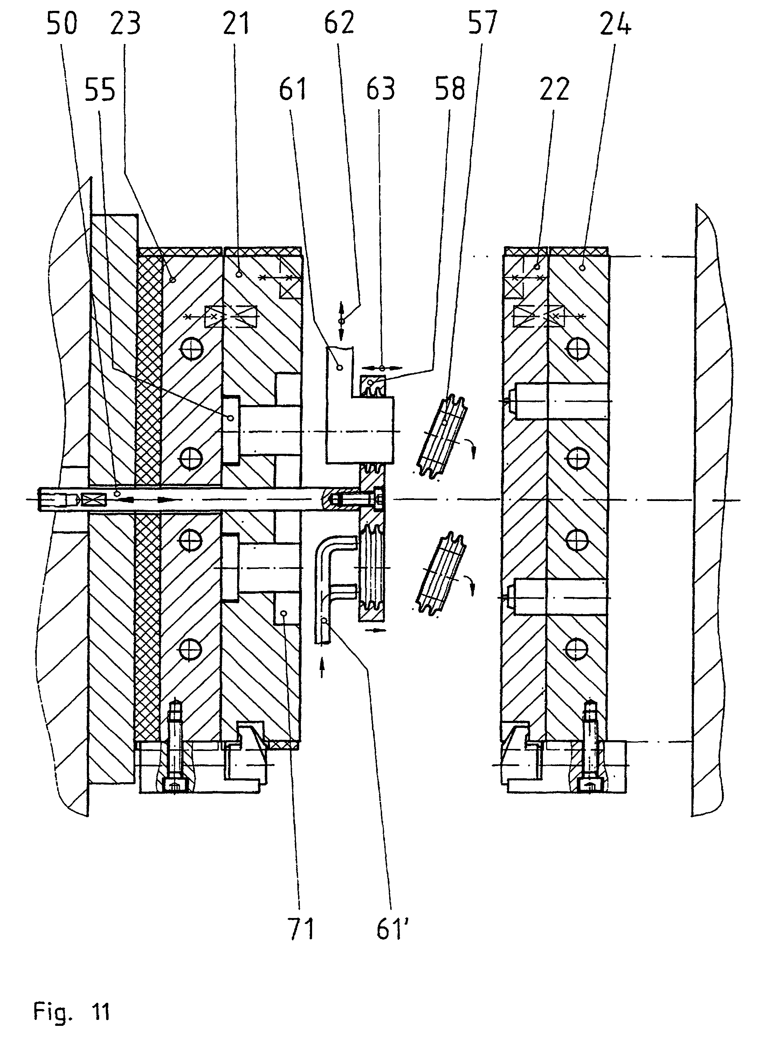

- Figur 11: das vierte Ausführungsbeispiel nach Figur 10 in geöffnetem Zustand;

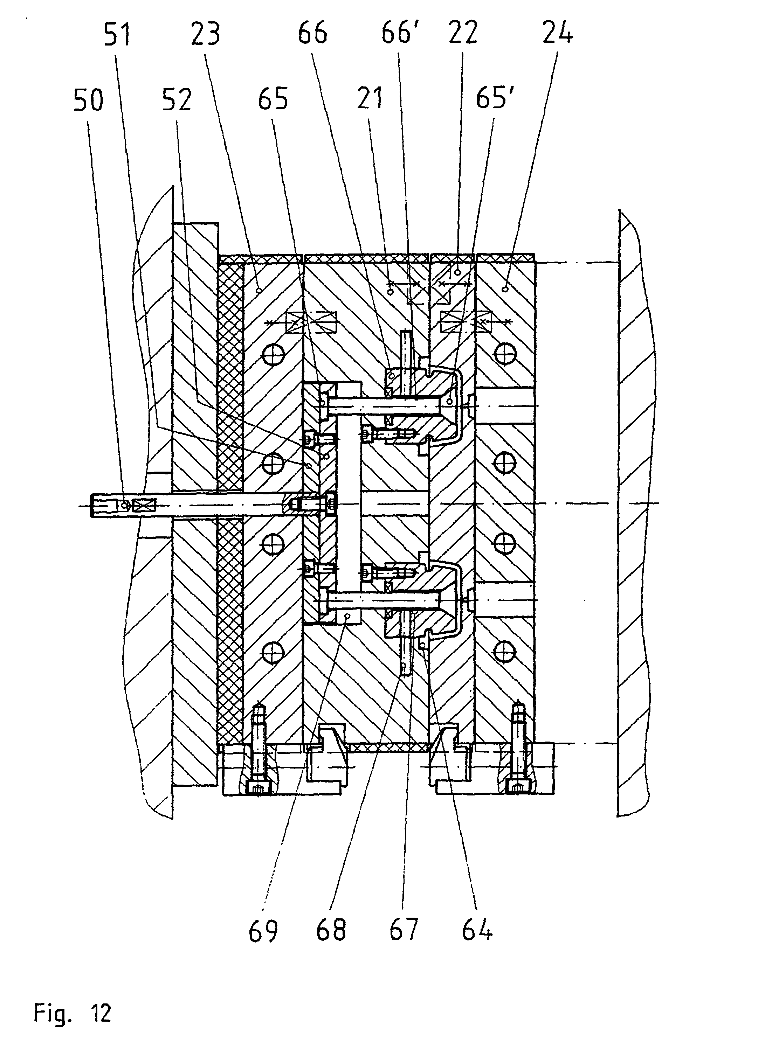

- Figur 12: ein fünftes Ausführungsbeispiel in geschlossenem Zustand;

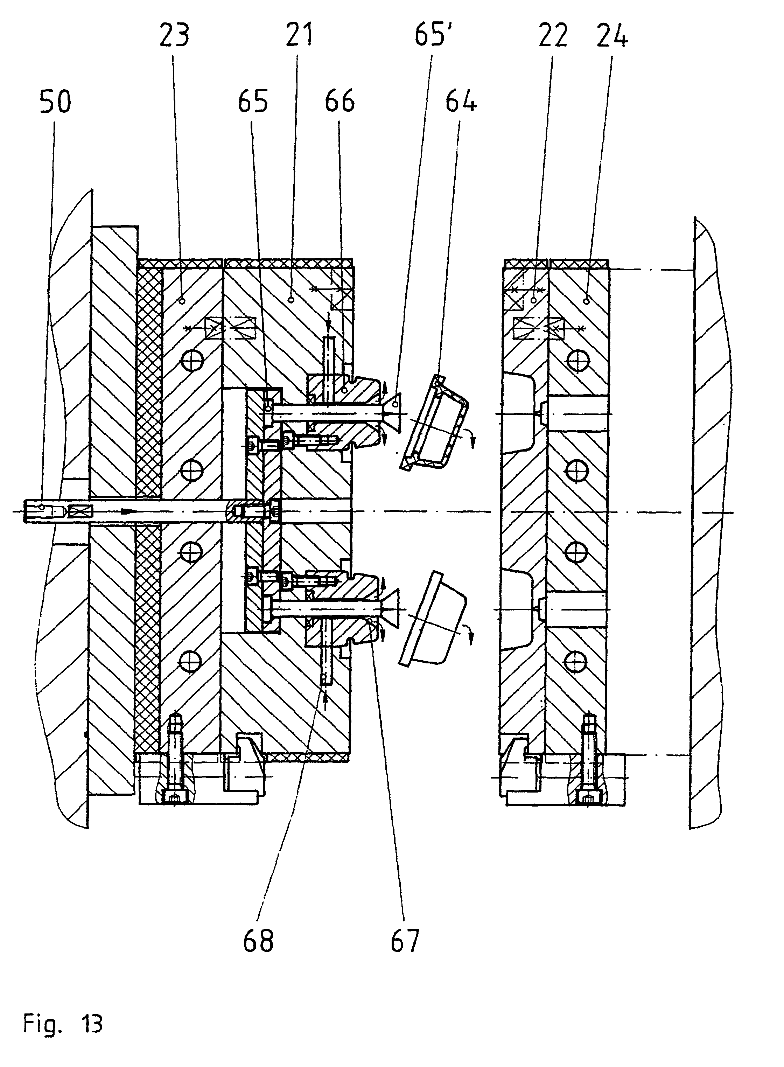

- Figur 13: das fünfte Ausführungsbeispiel nach Figur 12 in geöffnetem Zustand;
- Figuren 14/1 und 14/2: eine schematische Darstellung des Ablaufs des Werkzeugaustausches.

Beim ersten Ausführungsbeispiel nach den Figuren 3 bis 5 sind zwei Konturplatten 21, 22 vorgesehen, in denen die Ausnehmungen 1', 1" angebracht sind, die die Form für ein Werkstück, hier einen Ring 1, ergeben. Die Konturplatten 21, 22 sind jedoch nicht mehr - wie nach dem Stande der Technik - mit den Heizplatten 23, 24 verschraubt, sondern werden in der Arbeitsstellung (Figur 3) durch Schnellspannelemente 27 auf die Heizplatten 23, 24 gedrückt, d.h. sind mit ihnen lösbar verbunden. Die Schnellspannelemente sind mit um Achsen 27' dreh- oder schwenkbaren Andrücknasen 28 versehen (Figur 4), die auf Andrückflächen 29 in Ausnehmungen 30 der Konturplatten 21, 22 einwirken. Die Schnellspannelemente 27 weisen ferner, wie aus Figur 4 zu ersehen, Schwenkhebel 31 auf, so dass durch deren Drehung um 90° im Gegenuhrzeigersinn die Andrücknasen 28 außer Eingriff mit den Andrückflächen 29 gebracht und damit die Konturplatten 21, 22 von den Trägerplatten 23, 24 getrennt oder gelöst werden können. Die Schnellspannelemente 27 sind mittels Zapfen 32 in Halteklötzen 33 drehbar aufgenommen, die ihrerseits mit den Trägerplatten 23 bzw. 24 mittels Schrauben 34 verschraubt sind.

Eine schnell lösbare und schnell wieder herstellbare Verbindung der Träger- und Konturplatten ist auch mit anderen Verbindungseinrichtungen möglich.

Innerhalb der linken Werkzeughälfte 25 ist die Trägerplatte 23 mit der Isolierplatte 35 und der Grundplatte 36 fest verschraubt. Diese ist wiederum mit der Platte 7, die Teil der Spritzgießmaschine ist, verschraubt. Im Einzelnen sind diese Verschraubungen nicht alle ausgeführt. Einem Fachmann ist aber auf Grund der gemachten Angaben klar, wie das erfolgt.

Innerhalb der rechten Werkzeughälfte 26 ist die Konturplatte 22 mittels Schnellspannelementen 27 mit der Trägerplatte 24 lösbar verbunden, wobei das Schnellspannelement 27 mit der Heizplatte 24 verschraubt ist.

Die Heizkörper 38, die in den Bohrungen 39 der Trägerplatten angeordnet sind, sind gestrichelt gezeigt. Die Trägerplatten sind in den hier erläuterten Ausführungsbeispielen geheizt, also als Heizplatten ausgebildet. Bei der Verarbeitung von Thermoplasten werden sie gekühlt, sind also als Kühlplatten ausgebildet.

Nach dem Auseinanderfahren der Hälften einer Spritzgießmaschine und der Platten 6, 7 können nach einem einfachen Lösen der Schnellspannelemente 27 die Konturplatten 21, 22 von den darunterliegenden Trägerplatten 23, 24 getrennt und als Einheit ausgetauscht werden, wie dies in Figur 5 dargestellt ist. Das bedeutet, dass damit für verschiedene Werkstücke lediglich noch die Konturplatten 21, 22 ausgewechselt werden müssen, so dass innerhalb gewisser Produktgruppen die restlichen Teile des Werkzeugs, d.h. Trägerplatten und Isolierplatten in der Spritzgießmaschine verbleiben.

Zum Austausch werden die Konturplatten 21, 22 mit einem Transportbügel 37 verschraubt. Diese Verschraubungen sind lediglich schematisch angedeutet. Dem Fachmann ist auf Grund dieser Angaben klar, wie er das vornehmen kann.

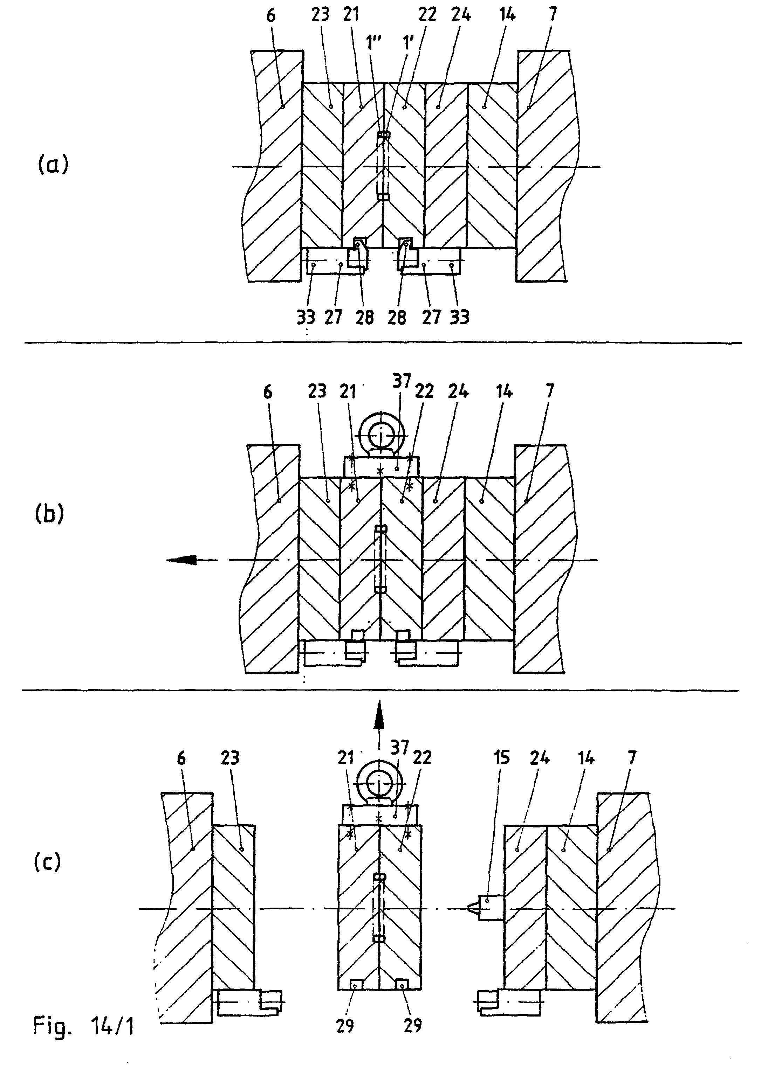

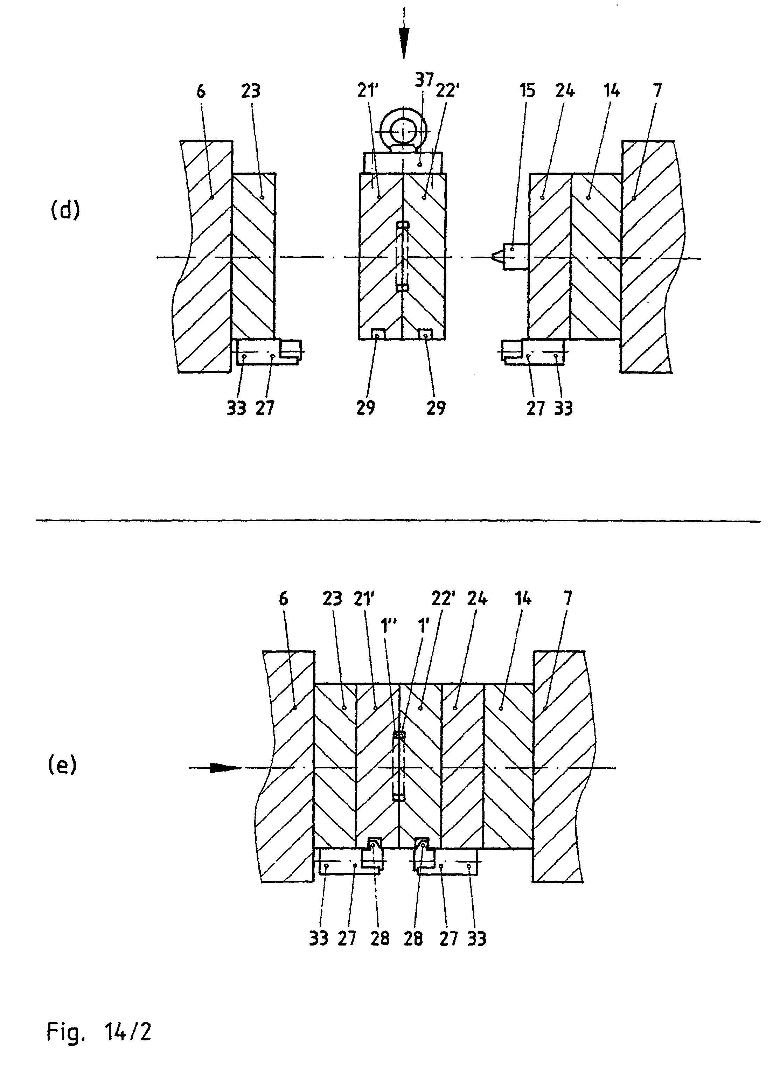

Die Schritte (a) bis (e) des Werkzeugaustauschvorganges sind schematisch in den Figuren 14/1 und 14/2 dargestellt. Man braucht lediglich im geschlossenen Zustand - Figur 14/1 (b) - der Maschine das Joch 37 anzuschrauben. Beim Auseinanderfahren der Maschine - Figur 14/1, bei (c) - lösen sich die Konturplatten 21 von den Trägerplatten 23 bzw. 24. Die Konturplatten 21 und 22 können sofort als Einheit herausgenommen und an anderer Stelle zum Abkühlen abgelegt werden. Dann werden - Figur 14/2 (d) - neue Konturplatten 21', 22' eingesetzt und nach dem Zusammenfahren der Maschine durch die Schnellspannelemente fixiert, siehe Figur 14/2 (e).

Der Austauschvorgang erforderte seither, dass man das Werkzeug in der Maschine abkühlen lies, die beiden Werkzeughälften demontierte und ein neues komplettes Werkstück installierte, das wieder aufgeheizt werden musste. Nunmehr kann in nicht abgekühltem Zustand ein Austausch nur der beiden Konturplatten erfolgen. Das benötigt somit jetzt sehr viel weniger Zeit.

An den beiden Konturplatten 21, 22 sind Zentriermittel 40, 41 vorgesehen (vgl. Figuren 3 bis 5), die die Konturplatten beim Zusammenfahren der Maschine zueinander zentrieren. Die Zentriermittel werden durch aneinander angepasste Vorsprünge und Ausnehmungen gebildet.

Ferner sind zur Zentrierung der Konturplatten zu den Trägerplatten 23, 24 beim Werkzeugaustausch Zentriermittel 42, 43 und 46, 47 vorgesehen, die im Zusammenwirken eine Kreuzzentrierung bilden. Dabei besteht eine Einheit der Zentriermittel - vgl. Figur 5 - aus einem im Querschnitt quadratischen Klotz 42 (oder 46) an der Trägerplatte 23, der in eine Nut 43 (oder 47) in der Rückseite der Konturplatte 21 eingreift, und zwar derart, dass er quer zur Ausdehnungsrichtung, also in Richtung der Pfeile 42" (Figur 4) kein Spiel hat, also zentriert, und längs der Ausdehnungsrichtung, also in Richtung der Pfeile 42', Spiel hat, um der Wärmeausdehnung in dieser Richtung folgen zu können. Eine solche Zentriereinheit ist insgesamt viermal, also auf jeder der beiden Symmetrieachsen, x-Achse und y-Achse, jeder Konturplatte je zweimal vorgesehen.

Die beiden Zentriereinheiten 42, 43 sind entlang der y-Achse, also symmetrisch zur x-Achse, vorgesehen. Sie zentrieren in x-Richtung, da sie in dieser Richtung sich nicht ausdehnen, da die x-Achse Symmetrieachse ist. In y-Richtung haben sie jedoch Spiel, so dass sie sich entsprechend der Wärmeausdehnung gegeneinander verschieben können. Die Zentriereinheiten 46, 47 sind auf der x-Achse, symmetrisch zur y-Achse, vorgesehen und zentrieren in y-Richtung, während sie in Richtung der Wärmeausdehnung, in x-Richtung, Spiel haben. Die Zentriereinheiten entlang der x-Achse werden durch einen Klotz 46 und eine Nut 47 gebildet. Insgesamt sind mindestens drei solcher Einheiten, zwei in der einen Richtung, eine in der anderen Richtung erforderlich, um beim Aneinanderfügen "kalter" Konturplatten 21, 22 an "heiße" Trägerplatten 23, 24 beim Übergang von Schritt (d) nach (e) in Figur 14/2 und der dadurch gegebenen Erwärmung der Konturplatten an den Trägerplatten eine einwandfreie Zentrierung, die unbedingt erforderlich ist, zu gewährleisten. Für die Dimensionierung der Zentriermittel oder -einheiten reicht es aus, wenn sich die Klötze 42, 46 nur wenige Millimeter in den Nuten 43, 47 verschieben können. Daher sind die Nuten auch nur wenig länger als die Klötze.

Wie durch die Kreuzschraffur ersichtlich, sind die Konturplatten 21, 22 und die Trägerplatten 23, 24 zur Seite hin durch Isolierplattenelemente 45 abgedeckt.

Das Werkstück 2 wird bei diesem Ausführungsbeispiel durch Bürsten 20 entformt.

Die weiteren Ausführungsbeispiele zeigen, wie man bei dem erfindungsgemäßen System auch verschiedene andere Entformsysteme zum Einsatz bringen kann.

Beim 2. Ausführungsbeispiel nach den Figuren 6 und 7 ist ein Auswerfen der Werkstücke vorgesehen, welches durch einen Auswerferbolzen 50, eine Auswerferplatte 51 und daran mittels einer weiteren Halteplatte 52 befestigte Auswerferstifte 53 realisiert wird. Der Auswerferbolzen 50 und die Auswerferplatte 51 bewegen sich in einer zur Trägerplatte 23 hin offenen Ausnehmung 56 in der Konturplatte 21. Die Auswerferplatten können aus Gründen besserer Wärmeübertragung auch hinter der Trägerplatte angeordnet sein. Der Auswerferbolzen 50 wird von der Maschinenseite her nach Öffnung der Spritzgussmaschine betätigt. Der Auswerfer verbleibt in der Maschine, wenn die Konturplatten 21 und 22 als Einheit ausgetauscht werden.

Das 3. Ausführungsbeispiel nach den Figuren 8 und 9 zeigt die Entformung durch eine Abstreiferplatte 54, die ebenfalls mit einem Auswerferbolzen 50 verbunden ist und nach Öffnung der Spritzgießmaschine von der Maschinenseite her betätigt wird. Das Werkzeug ist insofern etwas anders als das nach den Figuren 3 bis 7 aufgebaut, als ein Formkern 55 vorgesehen ist, der in die Ausnehmung 1" in der Konturplatte 22 hineinragt und mit der Ausnehmung und der Konturplatte zusammen die Form für das Werkstück, im Beispielsfall einen Ring 1, definiert (siehe Figur 9). Die Abstreiferplatte 54 ist in einer Ausnehmung 56, die zur Maschinenmitte, d.h. zur anderen Konturplatte 22 hin offen ist, aufgenommen.

Das 4. Ausführungsbeispiel nach den Figuren 10 und 11 zeigt die Entformung durch eine Ausdrück- oder eine Ausblasvorrichtung. Das Werkstück ist ein ringförmiger mit zwei Lippen versehener Dichtring 57. Die Form für das Werkstück wird durch die Kontur der Formplatte 58, die an dem Auswerferbolzen 50 befestigt ist, den Formkern 55, durch die Grundfläche 59 der Ausnehmung 71 und die Stirnfläche 60 der Konturplatte 22 gebildet.

Nach Öffnung der Maschine fährt der Auswerferbolzen 50 in die in Figur 11 gezeigte Stellung, so dass die Auswerferplatte 58, in der sich das Werkstück 57 befindet, aus der Ausnehmung 71 herausgefahren wird. Nun wird von außen entweder eine Ausdrückvorrichtung 61 eingefahren (Pfeil 62) und dann so bewegt (Pfeil 63), dass sie das Werkstück 57 aus der Formplatte 58 herausdrückt (Figur 11, obere Hälfte), oder - als Alternative - eine Ausblasvorrichtung 61 von der Seite her eingefahren und dann mit Druckluft beaufschlagt, so dass sie das Werkstück 57 aus der Formplatte 58 herausbläst. Die oben dargestellten Beispiele der Erfindung lassen sich je nach Geometrie und Problematik des Werkstücks beliebig kombinieren, wie im Folgenden dargestellt.

Das 5. Ausführungsbeispiel nach den Figuren 12 und 13 zeigt ein Werkzeug zum Spritzen einer Kappe 64, das durch eine Kombination von Ausblasen und Auswerfen entformt wird. Auf dem Auswerferbolzen 50 sitzt eine Auswerferplatte 51 und eine Halteplatte 52, an der Ventil-Auswerferstifte 65 befestigt sind. Sie sind in der Öffnung 66' eines Formkerns 66 verschiebbar, der in der Formplatte 21 angeordnet ist. Dem Ringspalt 67 zwischen Öffnung 66' und Ventilauswerferstift 65 wird über die Leitung 68 Druckluft zugeführt. Die Auswerferplatte 51 bewegt sich in einer Ausnehmung 69 in der Konturplatte 21 und drückt der Kopf der Ventil-Auswerferstifte 65 von innen gegen die Kappe 64. Gleichzeitig wird diese Ausdrückbewegung durch die Druckluft unterstützt, die dann aus dem Ringspalt 67 im Formkern 66 austritt.

## Patentansprüche

1. Werkzeug für Spritz- oder Druckguss, bestehend aus zwei Werkzeughälften (25, 26), die mit den Platten (6, 7) einer Spritzgießmaschine verbindbar sind und je eine Trägerplatte (23, 24) und eine Konturplatte (21, 22) aufweisen, wobei die Konturplatten (21, 22) Ausnehmungen (1', 1'') aufweisen, die zusammen die Form des erzeugten Werkstücks (1) ergeben und mit den Trägerplatten durch Spanneinrichtungen (27, 28) verbindbar sind, bei dem ferner Einrichtungen (38, 39) zur Heizung oder Kühlung der Werkzeughälften vorgesehen sind, **dadurch gekennzeichnet, dass** die Einrichtungen zur Heizung oder Kühlung (38,39) in den Trägerplatten (23,24) vorgesehen sind und dass in x- und y-Richtung wirksame erste Zentriermittel (42, 43; 46, 47) jeweils zwischen den Konturplatten (21, 22) und der ihnen zugeordneten Trägerplatte (23, 24) und zweite in x- und y-Richtung wirksame Zentriermittel (40, 41) zwischen den beiden Konturplatten (21,22) vorgesehen sind.

2. Werkzeug nach Anspruch 1, **dadurch gekennzeichnet, dass** zumindest eine Konturplatte (22) zumindest eine Öffnung (15') aufweist, durch die hindurch sich zur Materialzufuhr eine Düse (15) bis in die Ausnehmung (1', 1") hineinerstreckt.

3. Werkzeug nach Anspruch 1 oder 2, **dadurch gekennzeichnet, dass** die Spanneinrichtungen (27) drehbar an den gegeneinander beweglichen Platten (6, 7) der Spritzgießoder Druckgussmaschine oder an den Trägerplatten (23, 24) angeordnet sind.

4. Werkzeug nach Anspruch 3, **dadurch gekennzeichnet, dass** die Spanneinrichtungen Andrücknasen (28) aufweisen, die auf Andrückflächen (29) in Ausnehmungen (30) der Konturplatten (21, 22) wirken und in diese Position sowie aus dieser heraus schwenkbar sind.

5. Werkzeug nach Anspruch 1 oder einem der folgenden, **dadurch gekennzeichnet, dass** die beiden Konturplatten (21, 22) gemeinsam mit einer Handhabungsvorrichtung (37) verbindbar sind.

6. Werkzeug nach Anspruch 1 oder einem der folgenden, **dadurch gekennzeichnet, dass** in einer Konturplatte (21) an der der anderen Konturplatte (22) abgewandten Seite oder in der dahinter angeordneten Trägerplatte eine Ausnehmung (56) vorgesehen ist, in der eine Auswerfereinrichtung (50 bis 53) verschiebbar ist und deren Betätigungselement (50) sich durch Öffnungen in der Trägerplatte (23) hindurch erstreckt, und dass sich die Auswerferelemente (53) durch Öffnungen in der Konturplatte (21) hindurch verschiebbar sind.

7. Werkzeug nach Anspruch 1 oder einem der folgenden, **dadurch gekennzeichnet, dass** in einer Konturplatte (21) in der der anderen Konturplatte (22) zugewandten Seite eine Ausnehmung (56) vorgesehen ist, in der eine Abstreifvorrichtung (54) verschiebbar ist, und deren Betätigungselement (50) sich durch Öffnungen in der Trägerplatte (23) und der Konturplatte (2) sich hindurch erstreckt.

8. Werkzeug nach Anspruch 1 oder einem der folgenden, **dadurch gekennzeichnet, dass** in der Konturplatte (21) ein Formkern (55) angeordnet ist, der mit den Ausnehmungen (1', 1") und in der Konturplatte (21, 22) die Form des Werkstücks (57) bildet.

9. Werkzeug nach Anspruch 1 oder einem der folgenden, **dadurch gekennzeichnet, dass** ein die Form des Werkstücks teilweise durch eine in einer Ausnehmung (71) der Konturplatte (21) verschiebbare Trägerplatte (23) gebildet wird, deren Betätigungselement (50) sich durch die Trägerplatte (23) und die Konturplatte (21) hindurcherstreckt, und dass bei aus der Ausnehmung (71) ausgefahrenen Formplatte eine Ausdrückvorrichtung (61) oder eine Ausblasvorrichtung (61') das Werkstück (57) entformt.

10. Werkzeug nach Anspruch 1 oder einem der folgenden, **dadurch gekennzeichnet, dass** in der Konturplatte (21) an der der anderen Konturplatte (22) zugewandten Seite ein Formkern (66) angeordnet ist, durch den hindurch sich ein Auswerferstift (65) hindurch erstreckt, dessen Ende (65') als Ventilkörper ausgebildet ist, der den Ringspalt (67) zwischen dem Auswerferstift (65) und dem Formkern (66) verschließt und bei Betätigung mittels eines Betätigungselements (50) freigibt, dass dem Ringspalt (67) Druckluft zugeführt wird, und dass sich das Betätigungselement (50) durch die Trägerplatte (23) hindurcherstreckt.

11. Werkzeug nach Anspruch 1 oder einem der folgenden, **gekennzeichnet durch** eine Kreuzzentrierung (42, 43; 46, 47) der Konturplatten (21, 22) an den Trägerplatten (23, 24).

12. Werkzeug nach Anspruch 11, **dadurch gekennzeichnet, dass** erste Zentriermittel (46, 47) zwischen einer Konturplatte (21, 22) und einer Trägerplatte (23, 24) entlang einer ersten Symmetrieachse (x-Achse) des Werkzeugs bzw. der Konturplatten (21, 22) oder der Trägerplatten (23, 24) vorgesehen sind, die bezüglich einer Relativbewegung der Konturplatte zur Trägerplatte in Richtung dieser ersten Symmetrieachse Spiel aufweisen, in dazu senkrechter Richtung (Richtung der y-Achse) jedoch nicht, und dass zweite Zentriermittel (42, 43) entlang einer zweiten Symmetrieachse (y-Achse) angeordnet sind, die in Richtung dieser zweiten Symmetrieachse Spiel aufweisen, in der dazu senkrechten Richtung (Richtung der x-Achse) jedoch nicht.

13. Werkzeug nach Anspruch 11 oder 12, **dadurch gekennzeichnet, dass** die Zentriermittel durch einen Bolzen (42, 46) gebildet werden, der an einem der Bauteile Konturplatte/Trägerplatte angeordnet ist und in einer Nut (43, 47) im anderen der Bauteile Konturplatte/Trägerplatte in einer Richtung (42') zur Gewährleistung des Spiels verschiebbar und in der anderen Richtung (42") spielfrei aufgenommen ist.

14. Werkzeug nach Anspruch 11, 12 oder 13, **dadurch gekennzeichnet, dass** mindestens drei Zentriermitteln vorgesehen sind, wobei entlang der einen Symmetrieachse zwei Zentriermittel und entlang der anderen Symmetrieachse zumindest ein weiteres Zentriermittel angeordnet sind.

15. Verfahren zum Wechseln eines Spritzgieß- oder Druckgusswerkzeuges, das aus zwei Werkzeughälften (25, 26) besteht, die je Heizeinrichtungen (38, 39), eine Trägerplatte (23, 24) und eine darauf mittels Spanneinrichtungen (27) aufspannbare Konturplatte (21, 22) aufweisen, wobei die Werkzeughälften (25, 26) und an den gegeneinander bewegbaren Platten einer Spritzgieß- oder Druckgussmaschine befestigbar sind, **dadurch gekennzeichnet, dass**
(a) in zusammengefahrenem Zustand der Spritzgießmaschine die Konturplatten (21, 22) gemeinsam mit einer Transporteinrichtung (37) verbunden werden; dann
(b) die durch die Spanneinrichtungen (27, 28) gebildete Verbindung der Konturplatten (21, 22) mit den Trägerplatten (23, 24) gelöst wird; dann
(c) die Spritzgießmaschine auseinander gefahren wird, wobei sich die gemeinsam an der Transporteinrichtung (37) angebrachten Konturplatten (21, 22) von den Trägerplatten außer Eingriff gebracht und von diesen entfernt werden; dann
(d) ein weiteres Paar Konturplatten (21', 22'), die mittels einer Transporteinrichtung (37) verbunden sind, zwischen die Trägerplatten (23, 24) gebracht wird; und dann
(e) die Spritzgießmaschine wieder zusammengefahren, die Transporteinrichtung (37) entfernt und die Konturplatten (21', 22') mittels der Spanneinrichtungen (27) mit den Trägerplatten (23,24) verbunden werden.

## Claims

1. Tool for injection-moulding or pressure diecasting, comprising two tool halves (25, 26) which can be connected to the platens (6, 7) of an injection-moulding machine, each of which features a carrier plate (23, 24) and a contour plate (21, 22), whereby the contour plates (21, 22) exhibit recesses (1', 1") which together provide the shape of the manufactured workpiece (1), and which are connected with the carrier plates by clamp units (27, 28), on which devices (38, 39) are moreover provided for heating and cooling the tool halves, **characterised in that** the devices for heating and cooling (38, 39) are housed in the carrier plates (23, 24) and that a first centering means (40, 41) takes effect in each case in the x- and y-directions between the contour plates (21, 22) and the associated carrier plate (23, 24), and a second centering means (42, 43, 46, 47) is provided to take effect in the x- and y-directions, between the two contour plates (21, 22)

2. Tool according to claim 1, **characterised in that** at least one contour plate (22) exhibits an opening (15') through which a nozzle (15) of a feeding attachment protrudes until it enters the recess (1', 1").

3. Tool according to claim 1 or 2, **characterised in that** the clamp units (27) are rotatably mounted on the platens (6, 7) of the injection-moulding or pressure diecasting machine, which can be moved towards each other, or on the carrier plates (23, 24).

4. Tool according to claim 3, **characterised in that** the clamp units feature pressure lugs (28) which take effect on the pressure surfaces (29) in recesses (30) of the contour plates (21, 22) and that they can be swivelled into as well as out of this position.

5. Tool according to claim 1 or any one of the following claims, **characterised**
**in that** the two contour plates (21, 22) can be connected together by means of a handling device (37).

6. Tool according to claim 1 or any one of the following claims, **characterised**
**in that** a recess (56) is provided in a contour plate (21) on the side that is turned away from the other contour plate (22), or in the carrier plate that is positioned behind, into which recess (56) an ejector mechanism (50 to 53) is movable, and that the actuating member (50) of which protrudes through openings in the carrier plate (23), and that the ejector members (53) can be moved through openings in the contour plate (21).

7. Tool according to claim 1 or any one of the following claims, **characterised in that** a recess (56) is provided in one of the contour plates (21), on the side turned towards the other contour plate (22), within which a stripping device (54) can move, the actuating member (50) of which may protrude through openings in the carrier plate (23) and the contour plate (2).

8. Tool according to claim 1 or any one of the following claims, **characterised**
**in that** a mould core (55) is positioned in the contour plate (21), which together with the recesses (1', 1") and the contour plate (21, 22) provides the shape of the workpiece (57).

9. Tool according to claim 1 or any one of the following claims, **characterised in that** a carrier plate (23) that is movable within a recess (71) of the contour plate (21) is provided so as to constitute the shape of the workpiece in part, with the actuating member (50) passing through the carrier plate (23) and the contour plate (21), and that an ejector mechanism (61) or blow-out device (61') ejects the workpiece (57) from the moulding plate when it is driven out of the recess (71).

10. Tool according to claim 1 or any one of the following claims, **characterised in that** a mould core (66) is positioned in the contour plate (21) on the side facing the other contour plate (22), through which an ejector pin (65) passes, the end of which (65') takes the form of a valve unit which closes the annular gap (67) between the ejector pin (65) and the mould core (66) and which, when operated by an actuating member (50), supplies the annular gap (67) with compressed air, and that the actuating member (50) passes through the carrier plate (23).

11. Tool according to claim 1 or any one of the following claims, **characterised in that** a cross-centering arrangement (42, 43;46, 47) aligns the contour plates (21, 22) with the carrier plates (23, 24).

12. Tool according to claim 11, **characterised in that** a first centering means (46, 47) is provided between a contour plate (21, 22) and a carrier plate (23, 24) along a first axis of symmetry (the X-axis) of the tool, or the contour plates (21, 22), or the carrier plates (23, 24), which exhibit play with respect to a relative movement of the contour plate to the carrier plate in the direction of the first axis of symmetry, however not in the direction perpendicular to this (direction of the Y-axis), and that the second centering means (42, 43) is positioned along a second axis of symmetry (the Y-axis) and exhibits play in the direction of this second axis of symmetry, however not in the direction that is perpendicular to this (direction of the X-axis).

13. Tool according to claim 11 or 12, **characterised in that** the centering means comprises a bolt (42, 46) that is located on either the contour plate/carrier plate component and can be moved in a groove (43, 47) to facilitate play in one direction (42') in one of the contour plate/carrier plate components, and is located so as to be without play in the other direction (42").

14. Tool according to claim 11, 12 or 13, **characterised in that** at least three centering means are provided, whereby two centering means are positioned along the one axis of symmetry and at least a further centering means is positioned along the other axis of symmetry.

15. Method of changing an injection or pressure diecasting toot consisting of two tool halves (25, 26), each of which exhibits a heating device (38, 39), a carrier plate (23, 24) and a contour plate (21, 22) that can be clamped down onto the carrier plate (23, 24) by means of clamp units (27), whereby the two tool halves (25, 26) can be attached to the platens of an injection-moulding or pressure diecasting machine, which can be moved with respect to each other, **characterised in that**
(a) the contour plates (21, 22) can be connected up with a conveyor (37) when the injection-moulding machine is driven up; and then
(b) the contour plates (21, 22) held together with the carrier plates (23, 24) by the clamp units (27, 28) can be disconnected from them; and then
(c) the injection-moulding machine is driven apart, whereby the contour plates (21, 22) mounted on the conveyor device (37) are brought out of engagement with the carrier plates and are separated from these; and then
(d) a further pair of contour plates (21', 22'), which are connected by means of a conveyor device (37), is positioned between the carrier plates (23, 24); and then
(e) the injection-moulding machine is driven into position once again, the conveyor device (37) is removed and the contour plates (21', 22') are connected to the carrier plates (23, 24) by means of the clamp units (27).

## Revendications

1. Moule pour moulage par injection ou moulage sous pression, formé par deux demi-moules (25, 26) qui sont susceptibles d'être assemblés avec les plaques (6, 7) d'une presse d'injection et sont munis chacun d'une plaque de support (23, 24) et d'une plaque de formage (21, 22), les plaques de formage (21, 22) comportant des évidements (1', 1") qui, conjointement, permettent d'obtenir la forme de la pièce moulée (1), et pouvant être assemblées avec les plaques de support par des éléments de serrage (27, 28), dans lequel sont prévus en outre des dispositifs (38, 39) pour chauffer ou refroidir les demi-moules, **caractérisé en ce que** les dispositifs de chauffage et de refroidissement (38, 39) sont prévus dans les plaques de support (23, 34) et **en ce que** des premiers moyens de centrage (42, 43 ; 46, 47), agissant dans le sens x et y, sont prévus respectivement entre les plaques de formage (21, 22) et la plaque de support (23, 24) qui leur est associée et des deuxièmes moyens de centrage (40, 41), agissant dans le sens x et y, sont prévus entre les deux plaques de formage (21, 22).

2. Moule selon la revendication 1, **caractérisé en ce qu'**au moins une plaque de formage (22) comporte au moins un orifice (15'), à travers lequel passe une buse (15) destinée à l'admission de la matière, qui s'étend jusque dans l'évidement (1', 1").

3. Moule selon la revendication 1 ou 2, **caractérisé en ce que** les éléments de serrage (27) sont disposés de manière rotative contre les plaques (6, 7), mobiles l'une par rapport à l'autre, de la presse d'injection ou de la machine de moulage sous pression ou contre les plaques de support (23, 24).

4. Moule selon la revendication 3, **caractérisé en ce que** les éléments de serrage comportent des taquets de pression (28), qui agissent sur des surfaces de pression (29) dans des évidements (30) des plaques de formage (21, 22) et qui peuvent pivoter vers cette position, ainsi que hors de celle-ci.

5. Moule selon la revendication 1 ou l'une des revendications suivantes, **caractérisé en ce que** les deux plaques de formage (21, 22) peuvent être assemblées conjointement avec un dispositif de manipulation (37).

6. Moule selon la revendication 1 ou l'une des revendications suivantes, **caractérisé en ce que** dans le côté d'une plaque de formage (21), opposé à l'autre plaque de formage (22) ou dans la plaque de support disposée derrière celle-ci est prévu un évidement (56) dans lequel peut coulisser un élément d'éjection (50 à 53) et dont l'élément de commande (50) s'étend à travers des orifices réalisés dans la plaque de support (23), et **en ce que** les éléments d'éjection (53) peuvent coulisser à travers des orifices réalisés dans la plaque de formage (21).

7. Moule selon la revendication 1 ou l'une des revendications suivantes, **caractérisé en ce que** dans le côté d'une plaque de formage (21), orienté vers l'autre plaque de formage (22), est prévu un évidement (56) dans lequel peut coulisser un élément de démoulage (54), dont l'élément de commande (50) s'étend à travers des orifices réalisés dans la plaque de support (23) et dans la plaque de formage (21).

8. Moule selon la revendication 1 ou l'une des revendications suivantes, **caractérisé en ce qu'**un noyau du moule (55) est agencé dans la plaque de formage (21), lequel coopère avec les évidements (1', 1") dans la plaque de formage (21, 22) pour obtenir la forme de la pièce moulée (57).

9. Moule selon la revendication 1 ou l'une des revendications suivantes, **caractérisé en ce que** la forme de la pièce moulée est obtenue partiellement par une plaque-modèle, qui peut coulisser dans un évidement (71) de la plaque de formage (21) et dont l'élément de commande (50) s'étend à travers la plaque de support (23) et la plaque de formage (21), et **en ce que**, lorsque la plaque-modèle est extraite de l'évidement (71), la pièce moulée (57) est démoulée au moyen d'un élément éjecteur (61) ou d'un élément à buse éjectrice (61').

10. Moule selon la revendication 1 ou l'une des revendications suivantes, **caractérisé en ce que** sur le côté de la plaque de formage (21) orienté vers l'autre plaque de formage (22) est agencé un noyau du moule (66), à travers lequel s'étend une tige d'éjection (65), dont l'extrémité (65') est conçue sous forme de corps de soupape, par lequel la fente annulaire (67) entre la tige d'éjection (65) et le noyau du moule (66) est obturée et elle est dégagée lorsque ledit corps de soupape est actionné par un élément de commande (50), **en ce que** de l'air comprimé est acheminé vers la fente annulaire (67) et **en ce que** l'élément de commande (50) s'étend à travers la plaque de support (23).

11. Moule selon la revendication 1 ou l'une des revendications suivantes, **caractérisé par** des moyens de centrage (42, 43 ; 46, 47) disposés en croix pour l'ajustement des plaques de formage (21, 22) au niveau des plaques de support (23, 24).

12. Moule selon la revendication 11, **caractérisé en ce que** des premiers moyens de centrage (46, 47) entre une plaque de formage (21, 22) et une plaque de support (23, 24) sont prévus le long d'un premier axe de symétrie (axe des x) du moule et des plaques de formage (21, 22) ou des plaques de support (23, 24), lesquels, pour permettre un mouvement relatif de la plaque de formage par rapport à la plaque de support, sont conçus avec un jeu dans le sens de ce premier axe de symétrie, mais pas dans le sens perpendiculaire à celui-ci (sens de l'axe des y), et **en ce que** des deuxièmes moyens de centrage (42, 43) sont prévus le long d'un deuxième axe de symétrie (axe des y), lesquels sont conçus avec un jeu dans le sens de ce deuxième axe de symétrie, mais pas dans le sens perpendiculaire à celui-ci (sens de l'axe des x).

13. Moule selon la revendication 11 ou 12, **caractérisé en ce que** les moyens de centrage sont formés par un boulon (42, 46), qui est disposé au niveau de l'un des composants de la plaque de formage/plaque de support et qui peut coulisser dans l'autre composant de la plaque de formage/plaque de support dans un sens (42') permettant de garantir le jeu et est logé sans jeu dans l'autre sens (42").

14. Moule selon la revendication 11, 12 ou 13,
**caractérisé en ce qu'**il est prévu au moins trois moyens de centrage, deux moyens de centrage étant agencés le long de l'un des axes de symétrie et au moins un autre moyen de centrage étant agencé le long de l'autre axe de symétrie.

15. Procédé pour le remplacement d'un moule pour moulage par injection ou d'un moule pour injection sous pression, qui est formé par deux demi-moules (25, 26), qui sont munis chacun de dispositifs de chauffage (38, 39), d'une plaque de support (23, 24) et d'une plaque de formage (21, 22) pouvant être bloquée sur celle-ci au moyen d'éléments de serrage (27), les demi-moules (25, 26) pouvant être fixés contre les plaques, mobiles l'une par rapport à l'autre, d'une presse d'injection ou d'une machine de moulage sous pression, **caractérisé en ce que**
(a) lorsque la presse d'injection est en position insérée, les plaques de formage (21, 22) sont assemblées conjointement avec un dispositif de transport (37) ; ensuite
(b) l'assemblage entre les plaques de formage (21, 22) et les plaques de support (23, 24), réalisé au moyen des éléments de serrage (27, 28), est désolidarisé ; ensuite
(c) la presse d'injection est amenée en position extraite, dans laquelle les plaques de formage (21, 22) assemblées conjointement avec le dispositif de transport (37) sont désolidarisées des plaques de support et sont éloignées de celles-ci ; ensuite
(d) une autre paire de plaques de formage (21', 22'), qui sont assemblées au moyen d'un dispositif de transport (37), sont acheminées entre les plaques de support (23, 24) ; et ensuite
(e) la presse d'injection est à nouveau amenée en position insérée, le dispositif de transport (37) est écarté et les plaques de formage (21', 22') sont assemblées avec les plaques de support (23, 24) au moyen des éléments de serrage (27).
